# EUROPÄISCHE PATENTSCHRIFT

(11) **EP 1 577 969 B1**
(45) Veröffentlichungstag und Bekanntmachung des Hinweises auf die Patenterteilung: **05.04.2017**
(21) Anmeldenummer: 05001579.1
(22) Anmeldetag: 26.01.2005
(51) Int. Cl.: H01R 13/00, H01M 2/20, H01M 2/36, H01M 2/38, H01R 13/02

(54) **LADESTECKVERBINDERSATZ MIT SEITLICHEN FLUIDKANÄLEN**
ELECTRIC CONNECTION SET FOR CHARGING HAVING FLUID CHANNELS ON THE SIDES
ENSEMBLE DE CONNECTION ELECTRIQUE POUR CHARGE AYANT DES CANAUX POUR FLUIDES SUR LES COTÉS

(30) Priorität: 17.03.2004 DE 102004013090
(43) Veröffentlichungstag der Anmeldung: 21.09.2005
(73) Patentinhaber: Schaltbau GmbH, 81677 München (DE)
(72) Erfinder: Fraczek, Jerzy, 81827 München (DE); Rinser, Günter, 83620 Feldkirchen (DE)
(74) Vertreter: Grünecker Patent- und Rechtsanwälte PartG mbB

(56) Entgegenhaltungen:
- EP-A- 0 622 859
- EP-A- 1 014 510
- US-A- 3 777 298
- US-A- 5 637 006

## Beschreibung

Die Erfindung betrifft einen Ladesteckverbinderbausatz mit einer ein Dosengehäuse aufweisenden Dose und einem ein Steckergehäuse aufweisenden Stecker, wobei die Dose paarweise zum Übertragen von elektrischen Strömen angeordnete Hauptkontakte aufweist, und der Stecker entsprechende Gegenkontakte aufweist, wobei in Längsrichtung zwischen den Hauptkontakten eine gedachte Mittelebene verläuft, und Stecker und Dose zumindest je einen Fluidkanal aufweisen, wobei der Fluidkanal zu der Mittelebene einen größeren Abstand aufweist als ein benachbarter Hauptkontakt.

Aus dem Stand der Technik sind Ladesteckverbinder, wie etwa der kombinierte Lade-und Fluidsteckverbinder aus der EP 1011159A2 bekannt. Derartige Lade- und Fluidsteckverbinder übertragen elektrische Ströme, z.B. zu Gabelstaplern, und sind in der Lage, während des Ladevorgangs oder zeitlich versetzt zum Ladevorgang auch Fluide, wie etwa Gase und Flüssigkeiten, zu übertragen. Die aus dem Stand der Technik bekannten Ladesteckverbinder bestehen aus zwei gegengleichen Bauelementen, einem Stecker und einer Dose. Die Dose weist Hauptkontakte auf, über die hohe elektrische Ströme übertragen werden. Aus der EP 1011159A2 ist auch bekannt, dass unterhalb der Hauptkontakte und in dem Bereich innerhalb der Kontakte Fluidkanäle in den Ladesteckverbinder eingebracht werden können. Neben den Hauptkontakten sind auch so genannte Pilotkontakte, die auch Nebenkontakte genannt werden können, bekannt. Über diese Pilotkontakte werden lediglich kleine elektrische Steuerströme übertragen. Die Übertragung von elektrischen Strömen im Allgemeinen und von Fluiden im Allgemeinen über die Ladesteckverbinder erfolgt nur im zusammengesteckten Zustand von Dose und Stecker.

Bekannte Erfindungen, wie etwa die EP 1011159A2 haben den Nachteil, dass sie sehr hoch bauen. Die Dicke des Ladesteckverbinders wird deutlich dadurch erhöht, dass Fluidkanäle unterhalb der Hauptkontakte an dem Ladesteckverbinder angebracht werden. Solche klobigen Ladesteckverbinder sind jedoch kommerziell unerwünscht.

Aus der DE 9003174U1 ist eine Batterie-Anschlussvorrichtung mit extra angebrachten Fluidkanälen an einem Ladesteckverbinder offenbart. Doch auch hier erhöht sich die Bauhöhe.

Aus der DE 4310696A1 ist ein Batteriestecker bekannt, der Fluidkanäle in einem Bereich innerhalb einer Schürze der Dose und entsprechend gegengleich im Stecker integriert hat. Dabei müssen jedoch die Fluidkanäle sehr klein ausfallen. Aus der DE 9204381 U1 ist ein weiterer Batteriestecker bekannt, der ebenfalls Fluidkanäle aufweist. Auch aus der DE 9114909U1 ist eine Batterie-Anschlussvorrichtung bekannt, die entweder Fluidkanäle in das so genannte Steckgesicht, also den Bereich innerhalb einer Schürze des Dosengehäuses um die Hauptkontakte herum, aufweist, oder Fluidkanäle außerhalb des Steckgesichtes, außerhalb der Schürze, unterhalb der Hauptkontakte aufweist.

Benachbarter Stand der Technik ist auch aus der US 5637006 und der US 3777298 bekannt.

Die Erfindungen nach dem Stand der Technik weisen alle den Nachteil auf, dass sie entweder sehr hoch bauen oder aber derart kompakt bauen, dass die Dimension der Fluidkanäle nicht mehr ausreichend ist.

Es ist somit Aufgabe der vorliegenden Erfindung, eine gattungsgemäße flachbauende Ladesteckverbinderbausatzlösung zu liefern, die auch ausreichend große Fluidkanaldurchmesser ermöglicht.

Diese Aufgabe wird gattungsgemäß dadurch gelöst, dass in dem Stecker und der Dose je ein Kodierstift angebracht ist, der zur Entfernung von zumindestens einem der Fluidkanäle größer als die Entfernung zu einem der Hauptkontakte oder einem der Gegenkontakte ist.

Mit einer solchen Lösung wird es möglich, die Fluidkanäle außerhalb der Hauptkontakte in das Steckergehäuse oder das Dosengehäuse zu integrieren oder mit separaten Gehäuseteilen an dem Steckergehäuse oder dem Dosengehäuse anzubringen. Bei dieser Lösung wird vermieden, dass die Bauhöhe des Ladesteckerverbinderbausatzes erhöht wird. Die Bauhöhe des Ladesteckverbinderbausatzes bleibt gleich, lediglich die Baubreite des Ladesteckverbinderbausatzes erhöht sich. Dies ist jedoch im kommerziellen Einsatz der Ladesteckverbinderbausatze unerheblich. Bei einer solchen Ausgestaltung wird die Handhabbarkeit der Einzelteile des Ladesteckverbinderbausatzes, insbesondere von Stecker und Dose, deutlich erhöht. Der Ladesteckverbinderbausatz ist somit deutlich besser handhabbar. Auch ist ein solcher Ladesteckverbinderbausatz vielseitiger als die bekannten Erfindungen einsetzbar.

Bei einer derartigen Dimensionierung ist sichergestellt, dass die Fluidkanäle eine ausreichend große Dimensionierung erfahren können.

Im Folgenden werden an Hand von Unteransprüchen vorteilhafte Ausgestaltungen erläutert.

Besonders vorteilhaft ist es, wenn der zumindest eine Fluidkanal in dem Stecker und der Dose außerhalb eines Innenbereiches angeordnet ist, wobei der Innenbereich durch die Dosengehäuseseiten oder die Steckergehäuseseiten und durch die Hauptkontakte oder als Hauptkontaktaufnahmeausnehmungen ausgestaltete Gegenkontakte parallel zur Mittelebene verlaufende Begrenzungsgeraden aufgespannt ist. Dadurch wird verhindert, dass zu viele elektrisch führende Kontakte, wie etwa die Hauptkontakte oder eventuell noch angebrachte Pilotkontakte und zusätzlich die Fluidkanäle zu massiert im Inneren von Steckergehäuse und Dosengehäuse untergebracht werden müssen. Eine Entflechtung des Kanalsystems und Kontaktsystems ist somit vorteilhafterweise möglich.

Besonders niedrig bauende Ladesteckverbinder sind dann vorteilhafterweise die Folge, wenn die Länge der Seitenflächen, parallel zur Mittelebene gemessen, kürzer ist, als die orthogonal zur Mittelebene verlaufende Länge der Begrenzungsflächen der Dosengehäuseseiten oder der Steckergehäuseseiten.

Wenn die Länge der Seitenfläche, parallel zur Mittelebene gemessen, höchstens die Hälfte, vorzugsweise ein Viertel, der Länge der Begrenzungsfläche zur Mittelebene gemessen, beträgt, so ist es möglich, kompakte Ladesteckverbinder in einer vorteilhaften Weise herzustellen.

Um ausreichend Fluid vom Stecker zur Dose und umgekehrt übertragen zu können, ist es von besonderem Vorteil, wenn zumindest zwei Fluidkanäle je in dem Stecker und der Dose vorhanden sind. In den zwei Kanälen ist es auch möglich unterschiedliche Fluide, z.B. eine Flüssigkeit und ein Gas zu leiten. Es ist dann möglich in dem einen Fluidkanal eine Flüssigkeit und in dem anderen Fluidkanal ein Gas von dem Stecker zur Dose und umgekehrt zu übertragen.

Aus fertigungstechnischen Gründen, insbesondere aus Gründen der Symmetrie, ist es von Vorteil, wenn in dem Bereich zwischen den zwei Fluidkanälen die Hauptkontakte oder die Gegenkontakte positioniert sind.

Wenn die Fluidkanäle zwischen 0 und 30 mm von einer durch die Hauptkontakte oder die Gegenkontakte verlaufenden Bezugsebene entfernt sind, ist es möglich, eine sichere Verbindung der elektrisch leitenden Kontakte und der fluidübertragenden Fluidkanäle gleichzeitig zu ermöglichen. Dies stellt auch die Erfüllung einer Zulassungsvoraussetzung dar. Bei einer derartigen Ausgestaltung ist zwischen den Fluidkanälen und den elektrisch leitenden Hauptkontakten und Gegenkontakten genug Material vorhanden, so dass kein Fluid zu den elektrisch leitenden Kontakten gelangt und somit kein Kurzschluss die Folge sein kann.

Besonders einfache Fertigungsschablonen lassen sich dann kreieren, wenn die Mittelpunkte der Fluidkanäle gleich weit von der Bezugsebene entfernt sind.

Wenn die Fluidkanäle im Wesentlichen von der Mittelebene geschnitten sind, so können die Fluidkanäle und die Hauptkontakte sowie die Gegenkontakte im Wesentlichen in einer Ebene liegen, und somit einfach gefertigt werden.

Wenn die Fluidkanäle integral mit dem Steckergehäuse oder dem Dosengehäuse verbunden sind, so ist vorteilhafterweise ausgeschlossen, dass sich die Fluidkanäle von dem Steckergehäuse oder dem Dosengehäuse lösen können.

Es kann aber auch besonders vorteilhaft sein, wenn die Fluidkanäle an dem Steckergehäuse oder dem Dosengehäuse separat anbringbar sind, da dann die Fluidkanäle abgebaut werden können, womit sich auch die Baubreite des Ladesteckverbinders verändert. Eine Erhöhung der Variabilität ist die Folge.

Wenn die Gegenkontakte als Buchsen ausgebildet sind, so lassen sich die Hauptkontakte in einfachster und bekannter Weise in die Gegenkontakte einschieben und eine elektrische Leitung zwischen Stecker und Dose in bewährter Weise erzeugen.

Im Folgenden werden Ausführungsbeispiele der vorliegenden Erfindung anhand einer Zeichnung näher erläutert. Es zeigen:
- Fig. 1: eine Dose eines Ladesteckverbinderbausatzes aus dem Stand der Technik in perspektivischer Ansicht,
- Fig. 2: eine perspektivische schematische Teilansicht der Dose als erfindungsgemäißen Ladesteckverbinderbausatzes, und
- Fig. 3: eine perspektivische schematische Teilansicht eines erfindungsgemäßen Steckers des erfindungsgemäßen Ladesteckverbinderbausatzes.

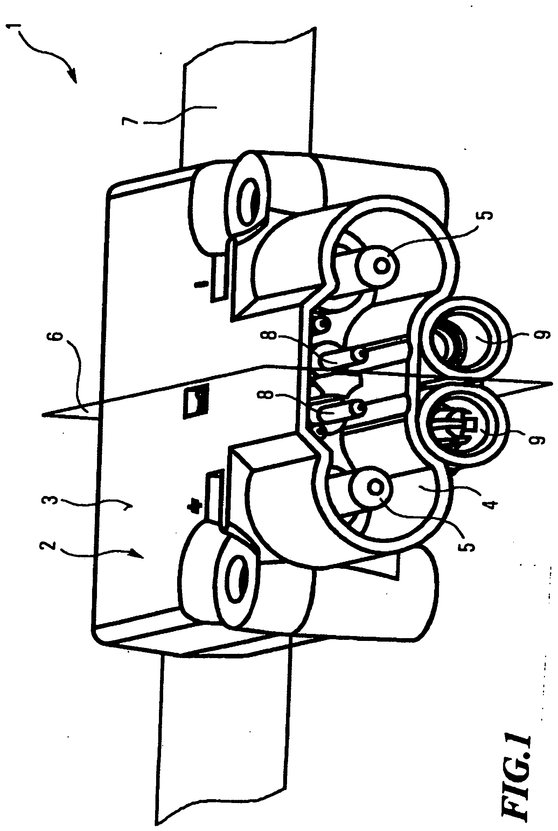

In Fig. 1 ist ein Ladesteckverbinderbausatz nach dem Stand der Technik und zwar gemäß der EP 1011159A2 gezeigt. Im Speziellen ist in Fig. 1 von dem Ladesteckverbinderbausatz 1 eine Dose 2 gezeigt. Die Dose 2 wird durch ein Dosengehäuse 3 gebildet. An einem Ende des Dosengehäuses 3 weist die Dose 2 eine Schürze 4 auf. Die Schürze 4 umgibt zwei Hauptkontakte 5. Durch die Dose 2 verläuft eine theoretische Mittelebene 6 in Längsrichtung der Dose. Die Hauptkontakte 5 sind gleichweit von der Mittelebene 6 entfernt. Leicht nach oben versetzt, zu einer Bezugsebene 7, wobei die Bezugsebene 7 durch die zwei Hauptkontakte 5 und orthogonal durch die Mittelebene 6 verläuft, sind zwei Pilotkontakte 8 im selben Abstand von der Mittelebene 6 gemessen positioniert. Durch die Hauptkontakte 5 fließt deutlich höherer Strom als durch die Pilotkontakte 8. Durch die Hauptkontakte fließt Starkstrom, wohingegen durch die Pilotkontakte 8 nur Steuerströme fließen. Die Ströme fließen selbstverständlich nur dann von der Dose 2 in den Stecker 12, wenn die Dose 2 in den Stecker 12 gesteckt ist. Außerhalb der Schürze 4, und bezogen auf die Bezugsebene 7 genau auf der anderen Seite von den Pilotkontakten, sind zwei Fluidkanäle 9 vorgesehen. Die Fluidkanäle 9 haben zur Mittelebene 6 einen kleineren Abstand als die Hauptkontakte 5 zu der Mittelebene 6.

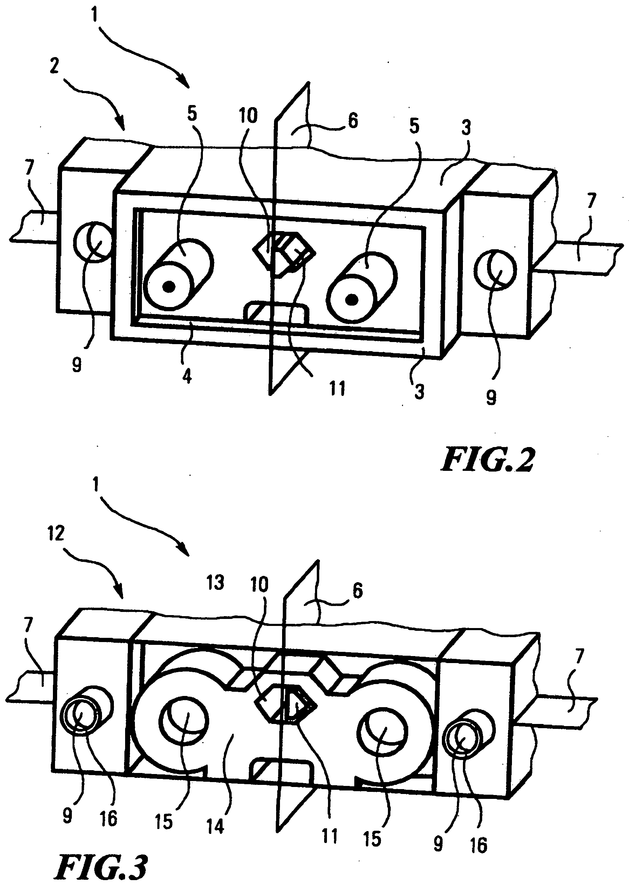

In Fig. 2 ist ein erfindungsgemäßer Ladesteckerverbinder 1 mit einer Dose 2, die ein Dosengehäuse 3 umfasst, dargestellt. Das Dosengehäuse 3 weist eine Schürze 4 auf und beherbergt auch die Fluidkanäle 9. Es ist jedoch auch möglich, die Fluidkanäle 9 in einem separaten Gehäuse anzubringen und dieses Gehäuse dann mit dem Dosengehäuse 3 zu kombinieren. Innerhalb der Schürze verlaufen, ähnlich wie in dem Stand der Technik entsprechend in Fig. 1, Hauptkontakte 5 zueinander und zu einer Mittelebene parallel und äquidistant. Zusätzlich zu den Elementen, wie sie in Fig. 1 gezeigt sind, weist der erfindungsgemäße Ladesteckverbinderbausatz 1 mit der Dose 2 auch einen Kodierkanal 10 auf, indem ein Kodierstift 11 untergebracht ist. Dieser Kodierstift 11 steht über den Kodierkanal 10 hinaus. Die Fluidkanäle sind hohl. Die Pilotkontakte 8, wie sie in Fig. 1 dargestellt sind, sind auch in einem erfindungsgemäßen Ladesteckverbinderbausatz in Dose 2 und in Stecker 12 integrierbar. Der Stecker 12 ist in Fig. 3 dargestellt. Die Fluidkanäle sind außerhalb der Schürze 4 vorgesehen. Die Fluidkanäle sind in derselben Ebene, insbesondere der Bezugsebene 7, wie die Hauptkontakte 5 angeordnet. Die Fluidkanäle haben dieselbe Entfernung von der Mittelebene 6. Sie haben eine größere Entfernung von der Mittelebene 6 als die Hauptkontakte 5. Die Entfernung zwischen den Fluidkanälen ist größer als die Entfernung zwischen den Hauptkontakten.

In Fig. 3 ist ein Stecker 12 dargestellt. Der Stecker 12 wird durch ein Steckgehäuse 13 gebildet. Das Steckgehäuse 13 hat einen Steckvorsprung 14, in den Gegenkontakte 15 in Form von Buchsen eingearbeitet sind. Im zusammengesteckten Zustand des Ladesteckverbinderbausatzes 1 ist der Stecker 12 in die Dose 2 eingesteckt. Dabei steckt der Steckvorsprung 14 im Inneren der Schürze 4. Die Schürze 4 trennt beide Bereiche für Strom und Fluid voneinander. Fluid, insbesondere eine Flüssigkeit kann wegen der Schürze 4 nicht zu den elektrischen Strom führenden Teilen gelangen. Die Hauptkontakte 5 geraten in Kontakt mit den Gegenkontakten 15. Innerhalb des Steckgehäuses 13 sind außerhalb des Steckvorsprungs 14 Fluidkanäle 9 vorgesehen. Die Fluidkanäle im Stecker 12 weisen Zylinderfortsätze 16 auf. Die Zylinderfortsätze 16 sind innen hohl und formen den Fluidkanal 9. Im zusammengesteckten Zustand von Stecker 12 in Dose 2 geraten die Zylinderfortsätze 16 in dichtenden eingeschobenen Kontakt mit den Fluidkanälen 9 der Dose 2. Die Fluidkanäle 9 der Dose 2 sind Vertiefungen. In besonderen Ausgestaltungen sind Dichtungen innerhalb der Fluidkanäle 9 oder auf der Außenseite des Zylinderfortsatzes 16 vorgesehen. Die Gegenkontakte 15 sind Vertiefungen in dem Steckvorsprung 14. In dem Steckvorsprung 14 ist auch ein Kodierkanal mit 10 mit darin vorhandenem Kodierstift 11 vorgesehen. Der Kodierstift 11 steht nicht über das Ende des Kodierkanals 10, insbesondere nicht über den Steckvorsprung 14 hinaus. Die Fluidkanäle 9 sind in derselben Bezugsebene 7, welche durch die Gegenkontakte 15 verläuft, angeordnet. Zwischen den Gegenkontakten 15 verläuft in Längsrichtung des Ladesteckverbinderbausatzes, insbesondere des Steckers 12 eine Mittelebene 6, zu der die die Gegenkontakte 15 äquidistant sind und auch die Fluidkanäle 9 äquidistant sind. Die Fluidkanäle haben denselben Abstand von der Mittelebene 6 und haben einen größeren Abstand zur Mittelebene 6 als die Gegenkontakte 15. Es ist auch möglich, in einem Ladesteckverbinderbausatz 1 mehr als zwei Fluidkanäle 9 zu verwenden.

Im Folgenden wird die Funktions- und Wirkungsweise des erfindungsgemäßen Ladesteckverbinderbausatzes 1 kurz beschrieben.

Im zusammengesteckten Zustand von Dose 2 mit Stecker 12 geraten die Hauptkontakte 5 in elektrisch leitenden Kontakt mit den Gegenkontakten 15. Allerdings ist ein Zusammenstecken von Dose 2 mit Stecker 12 nur möglich, wenn die Kodierstifte 11 in Dose 2 und Stecker 12 entsprechend ausgerichtet sind und sich nicht gegenseitig blockieren. Im zusammengesteckten Zustand des Ladesteckverbinderbausatzes 1 geraten die Zylinderfortsätze 16 der Fluidkanäle 9 des Steckers 12 in dichtenden und fluidleitenden Kontakt mit den Fluidkanälen 9 der Dose 2. Es ist im zusammengesteckten Zustand des Ladesteckverbinderbausatzes 1 möglich, gleichzeitig oder zeitlich unabhängig voneinander elektrische Ströme und Fluide zu übertragen. Es ist auch möglich verschiedene Fluide gleichzeitig durch den Ladesteckverbinderbausatz zu übertragen. Es ist möglich gleichzeitig Flüssigkeiten und Gase zu übertragen. Dazu verläuft in dem einen Fluidkanal die Flüssigkeit und in dem anderen Fluidkanal das Gas.

## Patentansprüche

1. Ladesteckverbinderbausatz (1) mit einer ein Dosengehäuse (3) aufweisenden Dose (2) und einem ein Steckergehäuse (13) aufweisenden Stecker (12), wobei die Dose paarweise zum Übertragen von elektrischen Strömen angeordnete Hauptkontakte (5) aufweist, und der Stecker (12) entsprechende Gegenkontakte (15) aufweist, wobei in Längsrichtung zwischen den Hauptkontakten (5) eine gedachte Mittelebene (6) verläuft, und Stecker (12) und Dose (2) zumindest je einen Fluidkanal (9) aufweisen, wobei der Fluidkanal (9) zu der Mittelebene (6) einen größeren Abstand aufweist als ein benachbarter Hauptkontakt (5), **dadurch gekennzeichnet, dass** in dem Stecker (12) und der Dose (2) je ein Kodierstift (11) angebracht ist, dessen Entfernung zu mindestens einem der Fluidkanäle (9) größer als die Entfernung zu einem der Hauptkontakte (5) oder einem der Gegenkontakte (15) ist.

2. Ladesteckverbinderbausatz nach Anspruch 1, **dadurch gekennzeichnet, dass** ein Fluidkanal (9) in dem Stecker (12) und der Dose (2) außerhalb eines Innenbereichs angeordnet ist, wobei der Innenbereich durch die Dosengehäuseseiten oder die Steckergehäuseseiten und durch die Hauptkontakte (5) oder als Hauptkontaktaufnahmeausnehmungen ausgestaltete Gegenkontakte (15) parallel zur Mittelebene (6) verlaufende Begrenzungsgeraden aufgespannt ist.

3. Ladesteckverbinderbausatz nach Anspruch 1 oder 2, **dadurch gekennzeichnet, dass** die Länge der Seitenflächen parallel zur Mittelebene (6) gemessen, kürzer ist, als die orthogonal zur Mittelebene (6) verlaufende Länge der Begrenzungsflächen der Dosengehäuseseiten oder Steckergehäuseseiten.

4. Ladesteckverbinderbausatz nach Anspruch 3, **dadurch gekennzeichnet, dass** die Länge der Seitenfläche, parallel zur Mittelebene (6) gemessen, höchstens die Hälfte, vorzugsweise ein Viertel der Länge der Begrenzungsfläche, parallel zur Mittelebene gemessen, beträgt.

5. Ladesteckverbinderbausatz nach einem der vorstehenden Ansprüche, **dadurch gekennzeichnet, dass** zumindest zwei Fluidkanäle (9) je in dem Stecker (12) und der Dose (2) vorhanden sind.

6. Ladesteckverbinderbausatz nach einem der vorstehenden Ansprüche, **dadurch gekennzeichnet, dass** in dem Bereich zwischen den zwei Fluidkanälen (9) die Hauptkontakte (5) oder die Gegenkontakte (15) positioniert sind.

7. Ladesteckverbinderbausatz nach einem der vorstehenden Ansprüche, **dadurch gekennzeichnet, dass** die Fluidkanäle (9) zwischen 0 und 30 mm von einer durch die Hauptkontakte (5) oder Gegenkontakte (15) verlaufenden Bezugsebene (7) entfernt sind.

8. Ladesteckverbinderbausatz nach Anspruch 7, **dadurch gekennzeichnet, dass** die Mittelpunkte der Fluidkanäle (9) gleich weit von der Bezugsebene (7) entfernt sind.

9. Ladesteckverbinderbausatz nach einem der vorstehenden Ansprüche, **dadurch gekennzeichnet, dass** die Fluidkanäle (9) im Wesentlichen von der Bezugsebene (7) geschnitten sind.

10. Ladesteckverbinderbausatz nach einem der vorstehenden Ansprüche, **dadurch gekennzeichnet, dass** die Fluidkanäle (9) integral mit dem Steckergehäuse (13) oder dem Dosengehäuse (3) verbunden sind.

11. Ladesteckverbinderbausatz nach einem der vorstehenden Ansprüche, **dadurch gekennzeichnet, dass** die Fluidkanäle (9) an dem Steckergehäuse (13) oder dem Dosengehäuse (3) separat anbringbar sind.

12. Ladesteckverbinderbausatz nach einem der vorstehenden Ansprüche, **dadurch gekennzeichnet, dass** die Gegenkontakte (15) als Buchsen ausgebildet sind.

## Claims

1. Charging plug connector kit (1) comprising a socket (2), which has a socket housing (3), and a plug (12), which has a plug housing (13), wherein the socket has main contacts (5) which are arranged in pairs for the purpose of transmitting electric current, and the plug (12) has corresponding mating contacts (15), wherein an imaginary central plane (6) runs in the longitudinal direction between the main contacts (5), and the plug (12) and the socket (2) at least each have a fluid channel (9), wherein the fluid channel (9) is at a greater distance from the central plane (6) than an adjacent main contact (5), **characterized in that** a coding pin (11) is arranged in the plug (12) and the socket (12) in each case, the spacing of said coding pin from at least one of the fluid channels (9) being greater than the spacing from one of the main contacts (5) or one of the mating contacts (15).

2. Charging plug connector kit according to Claim 1, **characterized in that** a fluid channel (9) in the plug (12) and the socket (2) is arranged outside an inner region, wherein the inner region is spanned by the socket housing sides or the plug housing sides and straight boundary lines which run through the main contacts (5) or mating contacts (15), which are configured as main contact receptacle recesses, parallel to the central plane (6).

3. Charging plug connector kit according to Claim 1 or 2, **characterized in that** the length of the side faces measured parallel to the central plane (6) is shorter than the length of the boundary faces of the socket housing sides or plug housing sides which runs orthogonally to the central plane (6).

4. Charging plug connector kit according to Claim 3, **characterized in that** the length of the side face measured parallel to the central plane (6) is at most half, preferably a quarter, of the length of the boundary face measured parallel to the central plane.

5. Charging plug connector kit according to one of the preceding claims, **characterized in that** at least two fluid channels (9) are present in the plug (12) and the socket (2) in each case.

6. Charging plug connector kit according to one of the preceding claims, **characterized in that** the main contacts (5) or the mating contacts (15) are positioned in the region between the two fluid channels (9).

7. Charging plug connector kit according to one of the preceding claims, **characterized in that** the fluid channels (9) are at a distance of between 0 and 30 mm from a reference plane (7) which runs through the main contacts (5) or mating contacts (15).

8. Charging plug connector kit according to Claim 7, **characterized in that** the central points of the fluid channels (9) are at an equal distance away from the reference plane (7).

9. Charging plug connector kit according to one of the preceding claims, **characterized in that** the fluid channels (9) are substantially intersected by the reference plane (7).

10. Charging plug connector kit according to one of the preceding claims, **characterized in that** the fluid channels (9) are integrally connected to the plug housing (13) or the socket housing (3).

11. Charging plug connector kit according to one of the preceding claims, **characterized in that** the fluid channels (9) can be separately attached to the plug housing (13) or the socket housing (3).

12. Charging plug connector kit according to one of the preceding claims, **characterized in that** the mating contacts (15) are in the form of female connectors.

## Revendications

1. Ensemble de connecteur enfichable pour charge électrique (1) comprenant une prise (2) présentant un boitier de prise (3) et une fiche (12) présentant un boitier de fiche (13), ensemble
dans lequel la prise comporte des contacts principaux (5) agencés par paire et destinés à la transmission de courants électriques, et la fiche (12) comporte des contacts conjugués (15) correspondants,
dans lequel dans la direction longitudinale entre les contacts principaux (5), s'étend un plan médian (6) fictif, et la fiche (12) et la prise (2) présentent chacune respectivement au moins un canal de fluide (9), et
dans lequel le canal de fluide (9) présente par rapport au plan médian (6), une distance plus grande qu'un contact principal (5) voisin,
**caractérisé en ce :que** dans la fiche (12) et dans la prise (2) est placé respectivement un pion de codage (11) dont la distance à au moins l'un des canaux de fluide (9) est supérieure à l'éloignement à l'un des contacts principaux (5) ou l'un des contacts conjugués (15).

2. Ensemble de connecteur enfichable pour charge électrique selon la revendication 1, **caractérisé en ce qu'**un canal de fluide (9) est agencé dans la fiche (12) et dans la prise (2) à l'extérieur d'une zone intérieure, la zone intérieure étant délimitée par les côtés de boitier de prise ou les côtés de boitier de fiche et par des droites de délimitation s'étendant parallèlement au plan médian (6) et passant par les contacts principaux (5) ou les contacts conjugués (15) configurés en tant que logements d'accueil des contacts principaux.

3. Ensemble de connecteur enfichable pour charge électrique selon la revendication 1 ou la revendication 2, **caractérisé en ce que** la longueur des surfaces latérales, mesurée parallèlement au plan médian (6), est plus courte que la longueur des surfaces de délimitation des côtés de boitier de prise ou des côtés de boitier de fiche, qui s'étend orthogonalement au plan médian (6)

4. Ensemble de connecteur enfichable pour charge électrique selon la revendication 3, **caractérisé en ce que** la longueur de la surface latérale, mesurée parallèlement au plan médian (6), vaut au plus la moitié, de préférence le quart de la longueur de la surface de délimitation, mesurée parallèlement au plan médian.

5. Ensemble de connecteur enfichable pour charge électrique selon l'une des revendications précédentes, **caractérisé en ce que** sont prévus au moins deux canaux de fluide (9) respectivement dans la fiche (12) et dans la prise (2).

6. Ensemble de connecteur enfichable pour charge électrique selon l'une des revendications précédentes, **caractérisé en ce que** dans la zone entre les deux canaux de fluide (9), sont positionnés les contacts principaux (5) ou les contacts conjugués (15).

7. Ensemble de connecteur enfichable pour charge électrique selon l'une des revendications précédentes, **caractérisé en ce que** les canaux de fluide (9) sont éloignés d'une valeur comprise entre 0 et 30 mm d'un plan de référence (7) passant par les contacts principaux (5) ou les contacts conjugués (15).

8. Ensemble de connecteur enfichable pour charge électrique selon la revendication 7, **caractérisé en ce que** les centres des canaux de fluide (9) sont éloignés de la même distance du plan de référence (7).

9. Ensemble de connecteur enfichable pour charge électrique selon l'une des revendications précédentes, **caractérisé en ce que** les canaux de fluide (9) sont sensiblement coupés par le plan de référence (7).

10. Ensemble de connecteur enfichable pour charge électrique selon l'une des revendications précédentes, **caractérisé en ce que** les canaux de fluide (9) sont reliés de manière intégrale au boitier de fiche (13) ou au boitier de prise (3).

11. Ensemble de connecteur enfichable pour charge électrique selon l'une des revendications précédentes, **caractérisé en ce que** les canaux de fluide (9) peuvent être rapportés de manière séparée sur le boitier de fiche (13) ou le boitier de prise (3).

12. Ensemble de connecteur enfichable pour charge électrique selon l'une des revendications précédentes, **caractérisé en ce que** les contacts conjugués (15) se présentent sous la forme de douilles.
